# EUROPEAN PATENT APPLICATION

(11) **EP 0 862 303 A2**
(43) Date of publication of application: **02.09.1998**
(21) Application number: 98300444.1
(22) Date of filing: 22.01.1998
(51) Int. Cl.: H04L 29/06

(54) **Electronic apparatus and control methods thereof**

(30) Priority: 22.01.1997 JP 9240/97
(71) Applicant: SONY CORPORATION, Tokyo 141 (JP)
(72) Inventor: Kawamura, Harumi, c/o SONY CORPORATION, Shinagawa-ku, Tokyo (JP)
(74) Representative: Pilch, Adam John Michael

(57) **Abstract**

An electronic-apparatus control method in a system formed by a plurality of units (1, 2) connected by a bus (3), the method including a macro-execution directing step for transmitting a macro executing command from a first unit (2) to a second unit (1); and a macro executing step for executing a macrocommand previously stored in the second unit (1), in accordance with the macro executing command transmitted by the macro-execution directing step. The electronic apparatus includes the first unit (2) for transmitting a macro executing command to the bus (3), and the second unit (1) for executing a macrocommand previously stored, in accordance with the macro executing command input via the bus (3).

## Description

The present invention relates to electronic apparatus and methods of controlling such apparatus, and in particular but not exclusively, to an electronic apparatus connected, in use, to a serial bus based on an Institute-of-Electrical-and-Electronics- Engineers (IEEE) 1394 standard, and to a method of controlling the electronic apparatus.

There is a recently proposed system in which information signals such as a digital video signal, and control signals, or commands for controlling the operation of each electronic apparatus, are transmitted or received among electronic apparatuses connected to one another via a serial bus (hereinafter referred to as a "1394 serial bus" if necessary) based on the IEEE 1394 standard.

Here, electronic apparatuses such as a digital video-cassette recorder (VCR) and a digital tuner are called "units", and functional blocks constituting the electronic apparatuses are called subunits. For example, when a digital VCR consists of a tuner unit for tuning, and a VCR unit for recording or reproducing information, the component blocks are called "subunits".

Command sets on the 1394 serial bus include, e.g., an audio video/control (AV/C) command set. In this AV/C command set are determined commands/responses communicated between a controller as an electronic apparatus for controlling one certain electronic apparatus on the 1394 serial bus, and a target as an electronic apparatus to be controlled by the controller. Specifically, the controller transmits a command to the target, and the target responds to the controller with a response.

Faculties supported by electronic apparatuses as units include one which is realized by successively performing a plurality of functions. For example, the video tape recording of a program in a digital VCR is realized by successively performing the function of receiving the program, and the function of recording the received program. Also, for example, instant access to the recorded program is realized by successively performing the function of rewinding the program-recorded video tape to a predetermined position, and the function of playback from the position.

The controller basically treats a subunit as a target, and it transmits a command to the subunit. Thus, when the subunit is controlled to successively perform a plurality of functions, the controller needs to transmit the command on demand while checking the operating condition of the subunit as the target, which disadvantageously complicates the control.

According to an aspect of the present invention, there is provided an electronic-apparatus control method in a system formed such that a plurality of units are connected by a bus, the electronic-apparatus control method including: a macro-execution directing step for transmitting a macro executing command from a first unit to a second unit; and a macro executing step for executing a macrocommand previously stored in the second unit, in accordance with the macro executing command transmitted by the macro-execution directing step.

The bus may be based on an IEEE 1394 standard.

At least one of the plurality of units may be an audio visual apparatus.

The electronic-apparatus control method may further include: a macro write step for storing the macro command from the first unit into the second unit; and a macro read step for causing the first unit to read the macro command stored in the second unit.

According to another aspect of the present invention, there are provided electronic apparatuses as a plurality of units connected by a bus, the electronic apparatuses including: a first unit for transmitting a macro executing command to a bus; and a second unit for executing a macrocommand previously stored, in accordance with the macro executing command input via the bus.

The bus may be based on an IEEE 1394 standard.

At least one of the plurality of units may be an audio visual apparatus.

The first unit may transmit to the second unit a macro write signal for causing the second unit to store the macro command, and a macro read signal for reading the macro command stored in the second unit.

According to a further aspect of the present invention, there is provided an electronic apparatus connected to a bus, the electronic apparatus including: first means for transmitting a macro executing command to the bus; and control means for detecting a response signal from another electronic apparatus connected to the bus, in accordance with the macro executing command, received via the bus, and operating in accordance with the response signal.

The first means may transmit to the other electronic apparatus via the bus a macro write signal for storing a macro command.

The bus may be based on an IEEE 1394 standard.

The electronic apparatus may be an audio visual apparatus.

According to a still further aspect of the present invention, there is provided an electronic apparatus connected to a bus, the electronic apparatus including: first means for receiving a macro executing command from another electronic apparatus connected to the bus, via the bus; and macro executing means for executing a macrocommand previously stored, in accordance with the macro command.

The first means may further transmit an acceptance signal to the other electronic apparatus via the bus when the macro command is executed.

The first means may further transmit via the bus the contents of the macrocommand previously stored, in accordance with a macro read signal received from the other electronic apparatus.

The bus may be based on an IEEE 1394 standard.

The electronic apparatus may be an audio visual apparatus.

According to an embodiment of the present invention, a macrocommand, as a group of a plurality of commands stored in a storage medium, is executed in an electronic apparatus in accordance with a request from another electronic apparatus connected to a bus. Accordingly, electronic apparatus control can be easily performed.

The invention will now be described by way of example with reference to the accompanying drawings, throughout which like parts are referred to by like references, and in which:
Fig. 1 is a block diagram showing an AV system embodying the present invention;
Fig. 2 is a block diagram showing the VCR shown in Fig. 1;
Fig. 3 is a chart illustrating a descriptor;
Fig. 4 is a flowchart illustrating a macrocommand execution process performed by a unit having received an execution command representing the execution of a macrocommand, or by a subunit;
Figs. 5A and 5B are charts showing the formats of an execution command and its response;
Figs. 6A and 6B are charts showing the formats of a command for inquiring the executing condition of a macrocommand and its response;
Figs. 7A and 7B are charts showing the formats of a command for inquiring the start address of an entry and its response;
Figs. 8A and 8B are charts showing the formats of a read command and a write command.

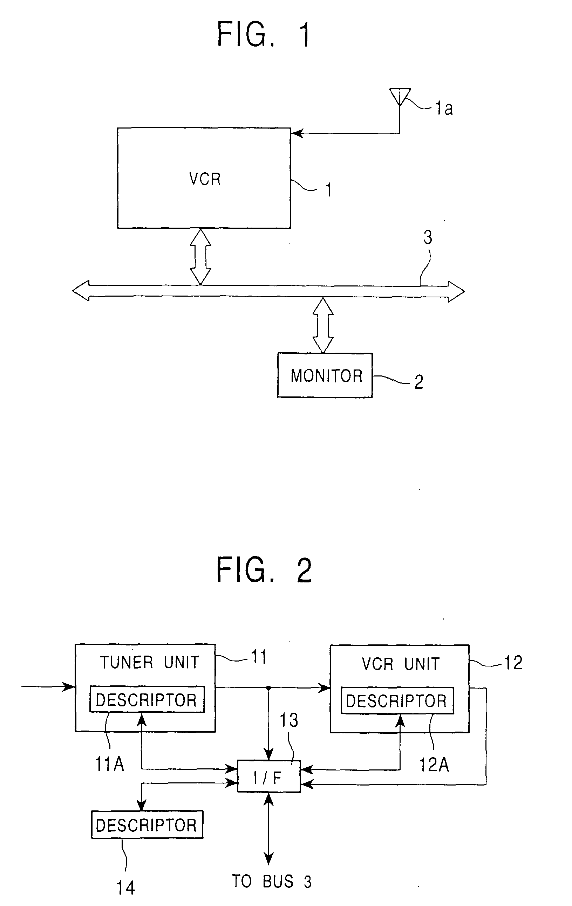

Fig. 1 shows an AV system according to an embodiment of the present invention.

A VCR (digital VCR) as a unit and a monitor 2 are connected to each other via a bus 3 as a 1394 serial bus.

In the AV system having the above arrangement, for example, when a user operates the monitor 2 so that a predetermined program is received and recorded, or displayed on the monitor 2, the command corresponding to the operation is transmitted from the monitor 2 to the VCR 1 via the bus 3. When the VCR 1 has received the command from the monitor 2, it executes the command to perform a predetermined process. In other words, for example, the VCR 1 extracts a predetermined-channel signal from television broadcast signals received by an antenna 19 and videotapes the television signal, or transmits the television signal to the monitor 2 for display via the bus 3.

Although only the VCR 1 and the monitor 2 are connected to the bus 3 as shown in Fig. 1, other electronic apparatuses can be connected thereto.

Next, Fig. 2 shows an example of the structure of the VCR 1.

In this embodiment, the VCR 1 as a unit includes subunits: a tuner unit 11 for tuning; and a VCR unit 12 for recording or reproducing information. The VCR 1 also includes an interface (I/F) 13 with the monitor 2 for performing communication control based on, e.g., the IEEE 1394 standard, and a descriptor 14 (storage means) including, e.g., a memory.

The I/F 13 is connected to the tuner unit 11, the VCR unit 12, the descriptor 14, and the bus 3.

In addition, the descriptor 14 belongs to the VCR 1 as one unit. The tuner unit 11 or VCR unit 12 as one subunit includes a descriptor 11A or 12A (storage means) having a structure identical to that of the descriptor 14.

Each descriptor is a storage means in which various types of information are stored. Accordingly, various types of information (hereinafter referred to as "descriptor information" if necessary) on the tuner unit 11, the VCR unit 12 or the VCR 1 are stored in the descriptor 11A, 12A or 14.

According to this embodiment, macrocommands comprising sets (combinations) of commands to be executed by the tuner unit 11, the VCR unit 12 or the VCR 1 are stored as one type of descriptor information in the descriptor 11A, 12A or 14.

Each descriptor information on one unit and subunits may be in advance stored in each descriptor. A command from a controller can perform change of, addition to, or deletion of the descriptor information.

For example, when the monitor 2 as one controller has transmitted a command (hereinafter referred to as a "reception command" if necessary) for commanding that the tuner unit 11 be a target so that the VCR 1 having the above-described structure receives a predetermined channel, the reception command is received by the tuner unit 11 via the bus 3 and the I/F 13. When the tuner unit 11 receives the reception command, it extracts the television signal of the predetermined channel in accordance with the reception command, and outputs the signal to VCR unit 12 and the I/F unit 13.

In addition, when the monitor 2 as one controller has transmitted a command (hereinafter referred to as a "recording command" if necessary) for commanding the VCR unit 12 as one target to record a television signal output by the tuner unit 11, or a command (hereinafter referred to as a "reproduction command" if necessary), this recording command or reproduction command is received by the VCR unit 12 via the bus 3 and I/F 13. When the VCR unit 12 has received the recording command, it records the television signal output by the tuner unit 11, and it has received the reproduction command, it reproduces the recorded television signal and outputs the reproduced signal to the I/F unit 13.

In addition, when the monitor 2 as one controller has transmitted a command (hereinafter referred to as a "transmission command" if necessary) for instructing the VCR 1 as one target to transmit television signals output by the tuner unit 11 or the VCR unit 12, this transmission command is received by the I/F 13 via the bus 3. When receiving this transmission command, the I/F 13 transmits to the monitor 2 the television signals output by the tuner unit 11 or the VCR unit 12 via the bus 3. This causes the monitor 2 to output the image and sound corresponding to the television signals from the VCR 1.

When the monitor 2 as one controller has transmitted a command (hereinafter referred to as an "execution command" if necessary) for instructing the tuner unit 11, the VCR unit 12 or the VCR 1 as one target to execute a macrocommand, this execution command is received by the tuner unit 11, the VCR unit 12 or the I/F 13 via the bus 3. When receiving the execution command, the tuner unit 11, the VCR unit 12 or the I/F 13 executes each command forming the macrocommands stored in the descriptor 11A, 12A or 14.

Accordingly, in this case, the monitor 2 as one controller only transmits one execution command, whereby enabling one unit or subunit to successively performing a plurality of functions (with ease) without transmitting a plurality of commands and monitoring the operating condition of the target.

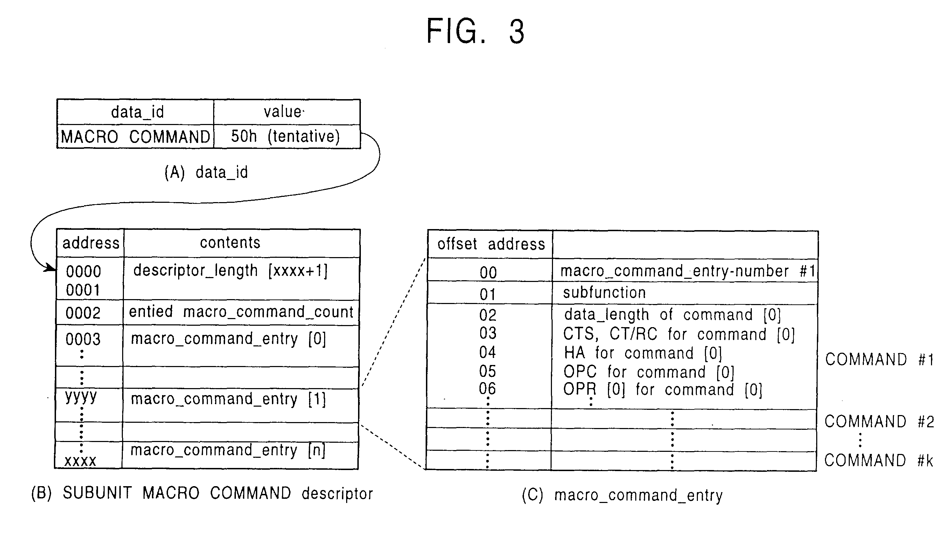

Next, Figs. 3 shows descriptor information on the macrocommands stored in the descriptors 11A, 12A and 14.

The descriptor information includes various types of information in addition to the information on the macrocommands. Accordingly, a data ID is assigned to each type of information. In this embodiment, "MACRO COMMAND" as a data ID is assigned to the information on each macrocommand as shown in Fig. 3(A).

In the embodiment in Fig. 3(A), 50h (where h represents that a numeral value just before h is hexadecimal) is correlated with the "MACRO COMMAND". For example, 40h etc., as a data ID, have already been assigned to information on specification of an AV system and information (SUBUNIT INDETIFIER) on a subunit function, and 41h etc., as a data ID, have already been assigned to information (OBJECT LIST) on objects capable of being selected. Basically, any value may be assigned as a data ID to be assigned to information on a macrocommand unless it is the already assigned value.

The data ID is a handle about its information. Accordingly, by referring to the data ID, the address in one descriptor at which the data ID-assigned information is stored can be recognized.

Here, for example, as shown in Fig. 3(B), information on the macrocommands (hereinafter referred to as "macrocommand descriptor information" if necessary) is stored from address 0000h.

In this embodiment, the descriptor has, for example, 16-bit address space, and can hold 8-bit (1-byte) data at each address.

In the macrocommand descriptor information, at the start address and the second address (0000h and 0001h in Fig. 3(B)), the length (size) "descriptor_length" of the macrocommand descriptor information is described in two bytes. In other words, according to the embodiment in Fig. 3(B), at addresses 0000h to xxxxh are stored the macrocommand descriptor information, and its length xxxx+1h as a "descriptor_length" is described.

At the third address (0002h in Fig. 3(B)), the number of macrocommands ("entried macro_command_count") included in the macrocommand descriptor information is described in one byte. In other words, not only one macrocommand but also a plurality of macrocommands may be described in the macrocommand descriptor information, and the number is described as the entried macro_command_count. In Fig. 3(B), n+1 macrocommands are described.

At the fourth address (0003h in Fig. 3(B)) and thereafter, groups of commands, forming the macrocommands, are described in units of macrocommands (hereinafter referred to as "entries" if necessary).

One entry "macro_command_entry[i]" is formed as shown in, e.g., Fig. 3(C) (i = 0, 1 n). The entry has a variable length. Also, in the left column of Fig. 3(C), offset addresses from the entry forefront are described.

At the start address (00h in Fig. 3(C)) of one entry is described a "macro_entry_number" (hereinafter abbreviated to an "entry_number" if necessary) for identifying the entry. Accordingly, as to the macro_command_entry[i], for example, i is described as the entry_number. At the second address (01h in Fig. 3(C)) of the entry is described the execution procedure "subfunction" of commands described thereafter. In other words, the third address (02h in Fig. 3(C)) and thereafter of the entry, commands #0, #1,..., #K, forming the macrocommand, are described, and the order of executing these commands, and conditions, etc. are described as each subfunction. Specifically, for example, instructions, as each subfunction, are described in which command #0 is initially executed, and if it has terminated normally, command #1 is executed, or if it has aborted, command #2 is executed.

As described above, at the third address (02h in Fig. 3(C)) and thereafter are described the above commands #0, #1,..., #K forming the macrocommand. These commands are described based on an AV/C command format. For example, referring to command #0 in Fig. 3(C), at the start address, the command #0 length "data_length of command[0]" is described and AV/C commands are thereafter described.

In other words, in the beginning, a command transaction set (CTS) and a command type/response code (CT/RC) are described. Following to the CT/RC, a header address (HA) and an operation code (OPC) are successively described, and thereafter, only a necessary number of operands (OPRs) are described.

Here, the CTS, when it is 0h, represents an AV/C command set. The CT/RC represents types of commands or responses. The HA represents a transmitter an address to which a command is transmitted, or a transmitter which has transmitted a response. The OPC represents contents of a process to be executed, and so forth, and the OPR represents parameters necessary for the process.

For example, by storing the above-described macrocommand descriptor information in the descriptor 12A of the VCR unit 12 in Fig. 2, and only transmitting from the monitor 2 to the.VCR unit 12 as the subunit an execution command for executing a macrocommand for successively performing the function of rewinding a program-recorded video tape to a predetermined position and the function of reproducing therefrom, instant access to the recorded program can be performed.

In the HA is normally described one unit or subunit having a descriptor for holding macrocommand descriptor information, and specifically, in the HA of one command to be stored in the descriptor 11A, 12A or 14 is normally described the tuner unit 11, the VCR unit 12 or the VCR 1. In the HA of one command to be stored in one descriptor included in one unit (the descriptor 14 included in the VCR 1 as one unit in the embodiment in Fig. 2), a subunit can also be described.

Specifically, in one macrocommand to be stored in one descriptor included in one unit, one command to be executed by one subunit included in the unit may be described, and in this case, in the HA of the command, the subunit is described.

For example, by storing the above-described macrocommand descriptor information in the descriptor 14 of the VCR 1 in Fig. 2, and only transmitting from the monitor 2 to the VCR 1 an execution command for executing the macrocommand for successively performing the function of receiving a program and the function of recording the received program, one predetermined program can be recorded. In other words, in this case, the plurality of subunits-related functions, causing the tuner unit 11 to receive the predetermined program and causing the VCR unit 12 to record the program, are realized by one execution command.

The macrocommand in this case consists of the commands for executing the function of receiving the program and the function of recording the received program. As described above, the execution command to execute the macrocommand is transmitted from the monitor 2 to the VCR 1 as one unit, and in the descriptor 14, the tuner unit 11 needs to be described in the HA of the command to execute the function of receiving the program, and the VCR unit 12 needs to be described in the HA of the command to execute the function of recording the received program.

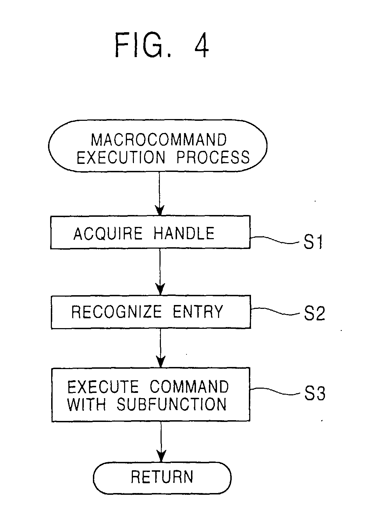

With reference to a flowchart in Fig. 4, a process in which the unit or subunit receives the execution command, and executes the macrocommand will be explained below.

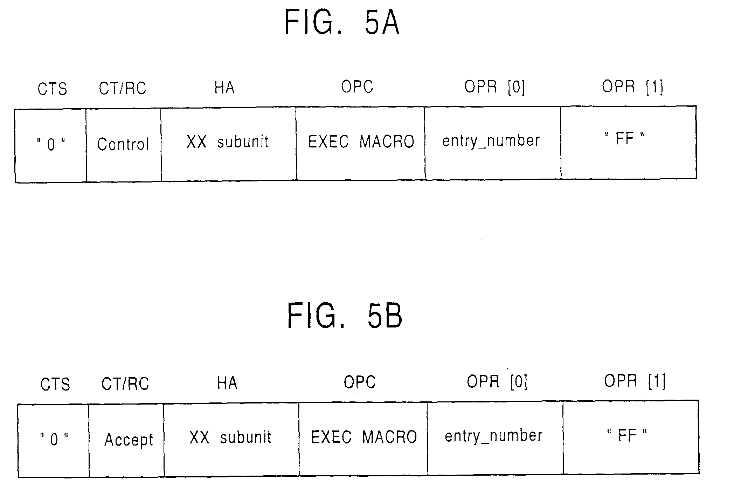

When the unit or subunit receives one execution command, in step S1, it acquires the data ID (Fig. 3(A)) assigned to one macrocommand, namely, the handle of macrocommand descriptor information, whereby it recognizes the address at which the macrocommand descriptor information is stored in the descriptor. Subsequently, the process proceeds to step S2, in which the entry (Fig. 3(B)) of the macrocommand to be executed is recognized. Specifically, as shown in Figs. 5A and 5B described below, the execution command includes the entry_number (Fig. 3(C)) of the macrocommand to be executed, and in step S2, the entry of the macrocommands to be executed is recognized from the entry_number. Successively, the process proceeds to step S3, and in accordance with the subfunction (Fig. 3(C)) of the entry recognized in step S2, the command described in recognized command is executed, and the process terminates.

Next, Figs. 5A and 5B show examples of one execution command and one response sent back by one unit or subunit having received the execution command.

In the execution command, as shown in Fig. 5A, 0h representing an AV/C command is set in the CTS, and "Control" representing a control request is set in the CT/RC. In the HA is set the unit or subunit as the address of the execution command. In Figs. 5A and 5B, "XX subunit" is the address.

"EXEC MACRO" representing a process related to macrocommand execution is set in the OPC, and the entry_number of the macrocommand to be executed is set in "OAR[0]" is set. In the OPR[1] a dummy code (FFh in Fig. 5A) is set.

The unit or subunit, having received the above-described execution command, replies with a response having a format shown in Fig. 5B. The response is identical to the execution command, excluding the CT/RC. When the macrocommand of the entry, designated by the execution command, is executable or not executable, "Accept" or "Reject" representing the condition is set in the CT/RC.

After the execution command is transmitted, it is possible to know the executing condition of the macrocommand by using a command for requesting a status.

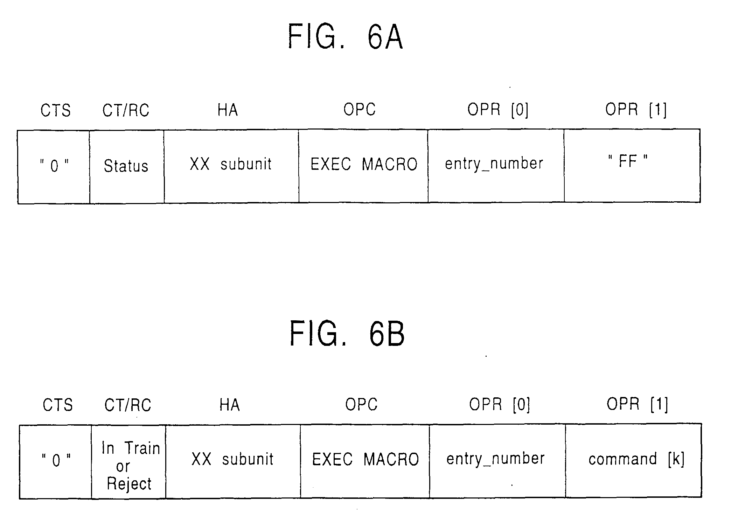

Figs. 6A and 6B show examples of the format of a command for inquiring the executing condition of one macrocommand and the format of the response corresponding to this command.

The command for inquiring the executing condition of one macrocommand is basically identical to the execution command in Fig. 5A. However, in the CR/RC is set not "Control" but "Status" representing a status request. In the OPR[0], the entry_number of the macrocommand for inquiring the executing condition is set.

In addition, as shown in Fig. 6B, the response is identical to the command for inquiring the executing condition of the macrocommand, excluding the CR/RC and the OPR[1]. While the macrocommand is being executed or when it is not executed (cannot be executed), "In Tran (In Transition)" or "Reject" representing the condition is set in the OPR[1]. Also, if the macrocommand is being executed, the number "command[k]" corresponding to the command being actually executed, among commands forming the macrocommand, is set in the OPR[1].

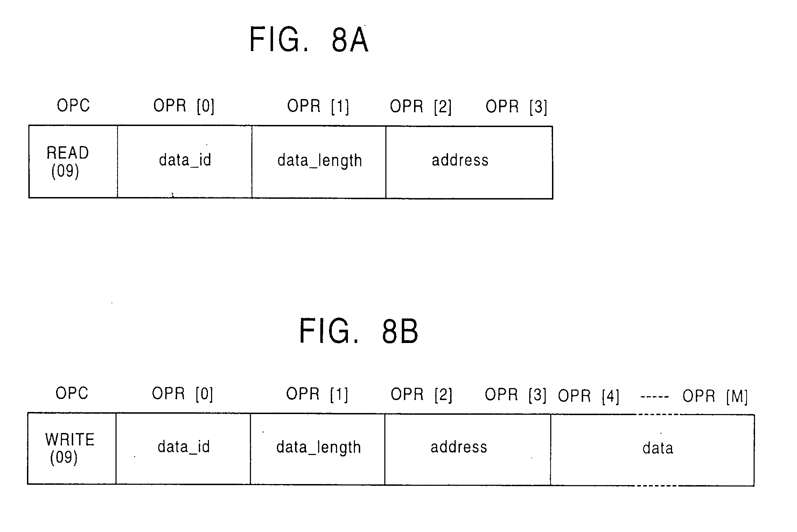

Incidentally, there is a case which needs to read storage contents so that one macrocommand stored in the descriptor llA, 12A or 14 can be recognized. There is also a case which needs to rewrite one macrocommand. The reading or writing one macrocommand needs the start address of the entry of the macrocommand, which will be described below with reference to Figs. 8A and 8B.

Accordingly, there is prepared a command for inquiring the start address of the entry of the macrocommand.

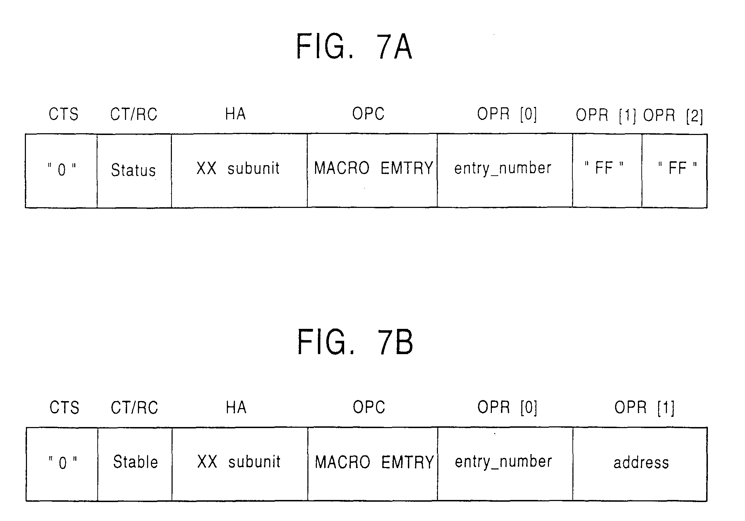

Figs. 7A and 7B show examples of the format of one command for inquiring the start address of the entry of one macrocommand and the response corresponding to this command.

The command for inquiring the start address of the entry of one macrocommand is basically identical to a combination of the command shown in Fig. 6A for inquiring the executing condition of one macrocommand and the OPR[2]. In the OPR[2] is set, e.g., FFh as a dummy code, similar to the OPR[1]. In OPR[0], the entry_number of the macrocommand for inquiring the start address is set. Also, in the OPC is set "MACRO ENTRY" representing a process related to the entry of the macrocommand in place of "EXEC MACRO".

In addition, as shown in Fig. 7B, the response is identical to the command for inquiring the start address of one macrocommand, excluding the CT/RC, the OPR[1] and the OPR[2]. In the CT/RC, "stable" in place of "status" is set. And, in the OPR[1] and the OPR[2], the start address "address" of the entry by the entry_number set in the OPR[0] is set.

After the start address of the entry is recognized with the above-described command, data can be read or written with respect to one descriptor by using, e.g., a read command or write command as shown in Figs. 8A and 8B. In Figs. 8A and 8B, CTS, CT/RC and HA are omitted.

Specifically, as shown in Fig. 8A, the read command has "READ", representing a request for reading, set in the OPC. Here, for example, 09h is assigned to the "READ". In the OPR[0], the data ID of information to be read from the descriptor is set. Accordingly, when macrocommand descriptor information (macrocommand) is read, "MACRO COMMAND" (Fig. 3(A)) is set. In the OPR[1], the data_length of the data to be read is set, and in the OPR[2] and the OPR[3], the start address (e.g., the entry start address) of the data to be read is set.

As shown in Fig. 8B, the write command has "WRITE", representing a request for writing, set in the OPC. Here, for example, 0Ah is assigned to "WRITE". In the OPR[0], the data ID of information to be written to one descriptor is set. Accordingly, when the macrocommand descriptor information (macrocommand) is written, "MACRO COMMAND" (Fig. 3(A)) is set. In the OPR[1], the data_length of the data to be written is set, and in the OAR,[2] and the OPR[3], the start address (e.g., the entry start address) at which the data is written is set. And, in the OPR[4] and thereafter the data to be written are set.

Although an AV system according to the preferred embodiment has been described, the present invention may be also applied to a system in which electronic apparatuses, differently from the AV system, are connected by a bus.

The embodiments have been described for cases using the 1394 serial bus. However, the present invention may be also applied to cases using other digital buses.

The embodiments have been described for a case having the monitor 2 as a controller and the VCR 1 (or the tuner 11 or the VCR 12) as a target; however, conversely, it is possible to use the VCR 1 as a controller and the monitor 2 and its subunits as targets.

## Claims

1. An electronic-apparatus control method in a system formed such that a plurality of units are connected by a bus,
said electronic-apparatus control method comprising:
a macro-execution directing step for transmitting a macro executing command from a first unit to a second unit; and
a macro executing step for executing a macrocommand previously stored in the second unit, in accordance with the macro executing command transmitted by the macro-execution directing step.

2. An electronic-apparatus control method according to Claim 1, wherein the bus is based on an Institute-of-Electrical-and-Electronics-Engineers (IEEE) 1394 standard.

3. An electronic-apparatus control method according to Claim 1, wherein at least one of the plurality of units is an audio visual apparatus.

4. An electronic-apparatus control method according to Claim 1, wherein said electronic-apparatus control method further comprises:
a macro write step for storing the macro command from the first unit into the second unit; and
a macro read step for causing the first unit to read the macro command stored in the second unit.

5. An electronic-apparatus control method according to Claim 4, wherein the bus is based on an IEEE 1394 standard.

6. An electronic-apparatus control method according to Claim 4, wherein at least one of the plurality of units is an audio visual apparatus.

7. Electronic apparatuses as a plurality of units connected by a bus, said electronic apparatuses comprising: a first unit for transmitting a macro executing command to a bus; and a second unit for executing a macrocommand previously stored, in accordance with the macro executing command input via the bus.

8. Electronic apparatuses according to Claim 7, wherein the bus is based on an IEEE 1394 standard.

9. Electronic apparatuses according to Claim 7, wherein at least one of the plurality of units is an audio visual apparatus.

10. Electronic apparatuses according to Claim 7, wherein the first unit transmits to the second unit a macro write signal for causing the second unit to store said macro command, and a macro read signal for reading said macro command stored in the second unit.

11. Electronic apparatuses according to Claim 7, wherein the bus is based on an IEEE 1394 standard.

12. Electronic apparatuses according to Claim 7, wherein at least one of the plurality of units is an audio visual apparatus.

13. An electronic apparatus connected to a bus, said electronic apparatus comprising:
first means for transmitting a macro executing command to the bus; and
control means for detecting a response signal from another electronic apparatus connected to the bus, in accordance with the macro executing command, received via the bus, and operating in accordance with the response signal.

14. An electronic apparatus according to Claim 13, wherein said first means transmits to the other electronic apparatus via the bus a macro write signal for storing a macro command.

15. An electronic apparatus according to Claim 13, wherein the bus is based on an IEEE 1394 standard.

16. An electronic apparatus according to Claim 13, wherein said electronic apparatus is an audio visual apparatus.

17. An electronic apparatus connected to a bus, said electronic apparatus comprising:
first means for receiving a macro executing command from another electronic apparatus connected to the bus, via the bus; and
macro executing means for executing a macrocommand previously stored, in accordance with the macro command.

18. An electronic apparatus according to Claim 17, wherein said first means further transmits an acceptance signal to the other electronic apparatus via the bus when the macro command is executed.

19. An electronic apparatus according to Claim 17, wherein said first means further transmits via the bus the contents of said macrocommand previously stored, in accordance with a macro read signal received from the other electronic apparatus.

20. An electronic apparatus according to Claim 17, wherein the bus is based on an IEEE 1394 standard.

21. An electronic apparatus according to Claim 17, wherein said electronic apparatus is an audio visual apparatus.
